# EUROPEAN PATENT APPLICATION

(11) **EP 4 446 466 A1**
(43) Date of publication of application: **16.10.2024**
(21) Application number: 23167528.1
(22) Date of filing: 12.04.2023
(51) Int. Cl.: C25B 1/04, C25B 9/19, C25B 9/63, C25B 9/77, C25B 11/03

(54) **ELECTROCHEMICAL ELECTRODE STRUCTURE, ELECTROCHEMICAL CELL, AND METHOD OF RETROFITTING A FINITE-GAP ELECTROCHEMICAL CELL INTO A ZERO-GAP TYPE ELECTROCHEMICAL CELL**

(71) Applicant: thyssenkrupp nucera AG & Co. KGaA, 44141 Dortmund (DE)
(72) Inventor: Hamada, Tsuyoshi, Okayama, 706-0134 (JP); Iguchi, Yukinori, Okayama, 706-0134 (JP); Tanaka, Masato, Okayama, 706-0134 (JP); Kawanishi, Koji, Okayama, 706-0134 (JP)
(74) Representative: Meissner Bolte Partnerschaft mbB

(57) **Abstract**

The present invention relates to an electrochemical electrode structure comprising a current collector and at least one electrode element, wherein the at least one electrode element is a two-dimensionally extended electrically conductive element having an open structure. In this electrochemical electrode structure, the at least one electrode element has at least one edge with a hemming rim at which a strip portion of the electrode is hemming bent away. Moreover, the invention relates to an electrochemical cell comprising a first electrode, a second electrode and a separator, with either the first electrode or the second electrode or both electrodes being such an electrochemical electrode structure as well as to a method of retrofitting a finite-gap electrochemical cell into a zero-gap type electrochemical cell using such electrochemical electrode structure.

## Description

### Technical Field

The invention was made in the field of electrolysis cells, in particular of zero-gap electrolyzers. The invention relates to an electrochemical electrode structure comprising a current collector and at least one electrode element, the at least one electrode element being a two-dimensionally extended electrically conductive element having an open structure. The invention furthermore relates to an electrochemical cell comprising a first electrode, a second electrode and a separator, with the separator being a two-dimensionally extended partially permeable element arranged between the first electrode and the second electrode, the two-dimensionally extended partially permeable element having two surface sides as well as to a method of retrofitting a finite-gap electrochemical cell into a zero-gap type electrochemical cell.

### Background

In recent years, there has been a significant increase in interest in using hydrogen as a secondary energy carrier. Among other things, this increased interest is based on the advantages of hydrogen: Hydrogen can be easily produced from water using renewable primary energy, hydrogen is a non-toxic material with a relatively high mass-related energy density, and the chemical energy stored in hydrogen can be easily converted back into electrical energy without releasing significant amounts of carbon dioxide or other greenhouse gases. In addition, hydrogen can also be used as an educt in various chemical processes. One important way of producing hydrogen is by electrolysis of water, a process in which hydrogen is generated in the cathode compartment of the electrolytic cell from alkaline aqueous solution, from acidic aqueous solution, or from neutral aqueous solution. The cathode compartment and the anode compartment are typically separated from each other by a separator such as a membrane or diaphragm. In many applications, alkaline water electrolysis in particular has proved to be a most promising process.

In the past, the efficiency of devices for alkaline water electrolysis was limited as such devices could only be operated at relatively low current densities, since a significant voltage drop occurs across the electrolyte solution due to high internal Ohmic resistance. Therefore, "zero-gap" design electrolytic cells were established in order to minimize the voltage drop across the electrolyte solution, thus allowing higher current densities to be achieved. In the zero-gap design, electrodes having an open structure (such as perforated or porous electrodes) are employed as anodes and cathodes that are brought in direct contact with the surfaces of the membrane with almost no spacing in order to reduce the width of the interelectrode gap and, thus, the voltage drop between both electrodes.

As a result of the direct contact between the outer edges of the mostly metallic electrodes and the upper surface of the membrane, mechanical damage to the thin membrane often occurs in the peripheral area of the cell. In order to reduce the risk of such damage, it is suggested in EP 3 575 440 A1 that the electrode shall exhibit a zero-gap design only in its middle region while the distance between the electrode and the membrane increases towards the periphery of the cell thus giving the electrode a one-sided cushion-like structure with an increasing finite gap in its edge region.

Unfortunately, the cushion-like structure results in some individual disadvantages: Since in the outer edge region of the electrochemical cell, the electrodes are not in direct contact with the membrane, the electrode area is decreased in which zero-gap conditions are actually realized. Moreover, in these outer edge regions, a voltage drop across the electrolyte solution occurs locally, resulting in an inhomogeneous current density distribution over the electrode area, thus preventing maximum efficiency in hydrogen production. In order to allow for a local finite-gap design in the outer edge region, a certain thickness is required for the electrodes. However, this may result in an increase in the overall thickness of the electrolytic cells so that it may not be possible to realize a maximum stacking density. While this may be less relevant when manufacturing a new cell, the higher thickness of the electrodes may be found to be problematic when retrofitting an existing electrolytic cell of finite-gap type into a zero-gap type electrolytic cell since in this case, the available space may be limited by the original design and may, thus, not permit employing an electrode with such a thickness.

Therefore, it is the task of the present invention to eliminate the above disadvantages and to provide an electrode arrangement for a zero-gap electrolytic cell, in which damage to the membrane by the electrodes is avoided and which at the same time allows the highest possible yield, while in addition it should also be possible to convert existing finite-gap electrolytic cells to zero-gap cells even where space is limited. Another task is to provide an appropriate electrolysis cell as well as a method of retrofitting a finite-gap electrochemical cell into a zero-gap type electrochemical cell.

### Summary

According to an aspect of the present invention, an electrochemical electrode structure is provided, which comprises a current collector and at least one electrode element, the at least one electrode element being a two-dimensionally extended electrically conductive element having an open structure. The at least one electrode element has at least one edge with a hemming rim at which a strip portion of the electrode element is hemming bent away. According to this solution, by hemming the strip portion of the electrode element, the sharp edge becomes eliminated, preventing the separator from being damaged. This solution is applicable even in a case where there is not enough space/gap to curve the electrode element away from the separator. Furthermore, a higher electrolysis performance can be achieved, because the zero gap design can be implemented over a larger area compared to when the ends of the electrode elements are curved away from the separator.

The damage to the separator by the edge of electrode element can be more reliably prevented, if the hemming rim has a bending angle between 170 ° and 180 °, in particular between 175 ° and 180 °, more particularly between 177 ° and 180 °.

The damage of the separator may be further prevented if the at least one electrode element has a further edge with a hemming rim, wherein the two edges are provided at opposite sides of the at least one electrode element.

It is preferable that the electrochemical electrode structure has a supportive element arranged between the at least one electrode element and the current collector, the supportive element comprising an elastic member adapted to push the at least one electrode element away from the current collector. This allows the distance between the opposing electrode elements to be reduced, ideally to substantial zero.

It is preferable that the at least one electrode element has four edges each having a hemming rim. The damage of the separator may be further prevented.

Alternatively, the at least one electrode element may have two further edges at opposite sides of the at least one electrode element with an inclined rim in which a strip portion of the electrode element is inclined bent away. The inclined rim may be used for attaching the electrode element to the supportive element.

The inclined rim may have a bending angle which is greater than 0 ° but equal to or smaller than 70 °, in particular the bending angle being between 15 ° and 45 °, more particularly between 15 ° and 30 °.

It is preferable that the supportive element comprises at least one protrusion extending from at least one end of the supportive element, each of the at least one protrusion having a front side facing the at least one electrode element and a rear side facing away from the at least one electrode element, wherein the strip portion of the electrode element in the inclined rim is adapted to lock the rear side of the at least one protrusion to fix at least one edge of the at least one electrode element to the supportive element. According to this arrangement, the electrode element can be attached to the supportive element without using any fixing elements.

The damage of the separator may be further prevented if the width of the strip portion of the electrode element in the hemming rim is in a range from 3 mm to 50 mm.

The electrochemical electrode structure may comprise a plurality of electrode elements. This facilitates handling of the electrode elements. Furthermore, the number of electrode elements can be adjusted to fit electrochemical cells of different sizes.

The electrode elements from the plurality of electrode elements may be arranged with the edges of adjacent electrode elements overlapping with each other or with the edges of adjacent electrode elements being joined edge-to-edge. The former may be advantageous for arranging electrode elements without gaps and thus obtaining maximum electrode area. The latter may be expected to have a flatter electrode surface.

It is preferable that the at least one electrode element is a grid element or an expanded mesh element. Gases generated on the front side of the electrode element may be discharged to the rear side of the electrode element through openings in the grid element or expanded mesh.

According to another aspect of the present invention, an electrochemical electrode structure is provided, which comprises a first electrode element, a second electrode element and a separator, with the separator being a two-dimensionally extended partially permeable element arranged between the first electrode element and the second electrode element, the two-dimensionally extended partially permeable element having two surface sides. Either the first electrode element or the second electrode element, or both the first electrode element and the second electrode element, are of an electrochemical electrode structure according to any one of above aspects. Each electrode element may be arranged next to one of the two surface sides of the separator such that at each hemming rim, the electrode element is hemming bent away from the surface side of the separator. According to this solution, by hemming the strip portion of the electrode element, , the sharp edge becomes eliminated, preventing the separator from being damaged. This solution is applicable even in a case where there is not enough space/gap to curve the electrode element away from the separator. Furthermore, a higher electrolysis performance can be achieved, because the zero gap design can be implemented over a larger area compared to when the ends of the electrode elements are curved away from the separator.

It is preferable that the electrochemical cell comprises a first compartment and a second compartment, wherein the first compartment accommodates the first electrode element, the second compartment accommodates the second electrode element, the separator separates the first compartment and the second compartment being arranged therebetween, and the separator has a first surface side and a second surface side. The first surface side contacts the first compartment and the second surface side contacts the second compartment for electrochemically interconnecting the first compartment and the second compartment.

According to yet another aspect of the present invention, a method of retrofitting a finite-gap electrochemical cell into a zero-gap type electrochemical cell is provided. The method comprising the steps of providing a zero-gap type electrochemical cell with at least two electrochemical electrode structures, removing the at least two electrochemical electrode structures, and inserting the electrochemical electrode structures according to any of the above aspects.

### Brief Description of the Drawings

FIG. 1 shows a schematic diagram of a bipolar electrolyzer according to the present invention;
FIG. 2 shows a schematic diagram of one of the electrochemical cells in FIG. 1;
FIG. 3 shows the view A-A in FIG. 2;
FIG. 4 shows the section B-B in FIG. 3;
FIG. 5 shows another example of the section B-B in FIG. 3;
FIG 6 shows a plan view of the electrode element;
FIG. 7A shows the section C-C in FIG. 6;
FIG. 7B shows another example of the section C-C in FIG. 6;
FIG. 8 shows a perspective view of a supportive element in the electrochemical cell;
FIG. 9 shows a perspective view of another exemplary supportive element in the electrochemical cell;
FIG. 10 shows a perspective view of another exemplary supportive element in the electrochemical cell;
FIG. 11 shows a perspective view of another exemplary supportive element in the electrochemical cell;
FIG. 12 illustrates attachment of the electrode element to the supportive element of FIG. 11;
FIG. 13 shows the view D-D in FIG. 12; and
FIG. 14 shows the section E-E in FIG. 12.

### Detailed Description

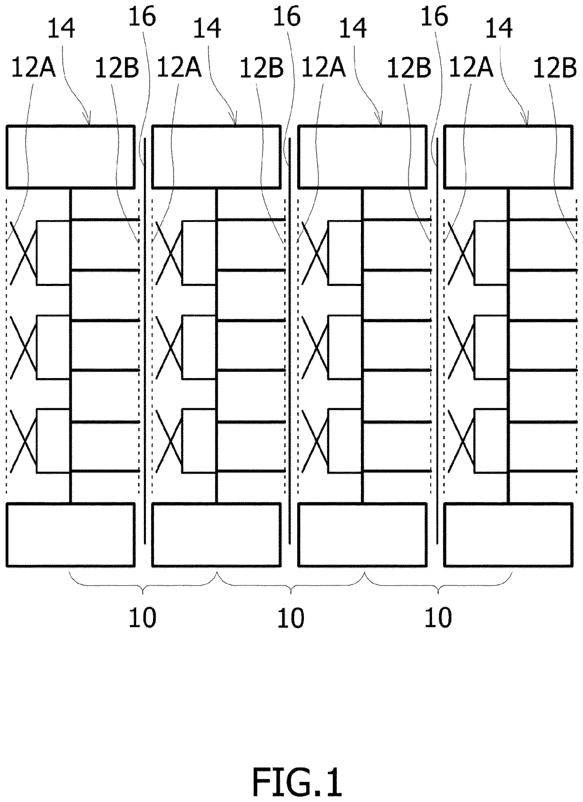

One exemplary electrolyzer to which the invention may be applied is a bipolar electrolyzer, such as ion-exchange membrane process electrolyzer, in which a plurality of bipolar electrochemical cell units are arranged in series, with an ion exchange membrane or diaphragm as a separator being interposed between the adjacent cell units (FIG. 1). The filter press technology may be utilized to join the adjacent cell units so that there is substantially no gap between electrode elements on both sides of the separator. However, the electrolyzer may be a monopolar electrolyzer in which each cell unit has either a cathode or anode electrode element on the side (not shown).

The electrochemical cell of the invention may be used for Chlor-Alkali electrolysis. In another example, the electrochemical cell of the invention may be used for alkaline water electrolysis (AWE). More generally, the electrochemical cell of the invention may be applicable to any electrolysis process using a first electrode element, a second electrode element, and a separator interposed between the first and second electrode elements.

As described herein, an electrochemical electrode structure may be defined as comprising a current collector and at least one electrode element, the at least one electrode element being a two-dimensionally extended electrically conductive element having an open structure. The term "current collector" refers to the electrical connection between the active material of the electrode element and an external circuit, which may thus cover electrically conductive part of a rear wall/partition wall of the respective electrode cell unit as well as to any supportive structure protruding therefrom. The "open structure" means a structure having one or more openings penetrating from one side to the other side of the electrode element.

In addition, an electrochemical cell may be defined as comprising a first electrode element, a second electrode element and a separator, with the separator being a two-dimensionally extended partially permeable element arranged between the first electrode element and the second electrode element, the two-dimensionally extended partially permeable element having two surface sides.

Referring now to FIG. 1 in light of the above definitions, one electrochemical cell 10 may thus comprise a first electrode element 12A (e.g., cathode) of an electrochemical cell unit 14, a second electrode element 12B (e.g., anode) of another electrochemical cell unit 14 which is adjacent to said electrochemical cell unit 14, and a separator 16 interposed between these electrode elements 12A, 12B. In other words, one electrochemical cell 10 may be configured by the two adjacent electrochemical cell units 14, 14. As will be noted, therefore, the electrochemical cell and the electrochemical cell unit are not always synonymous in this specification.

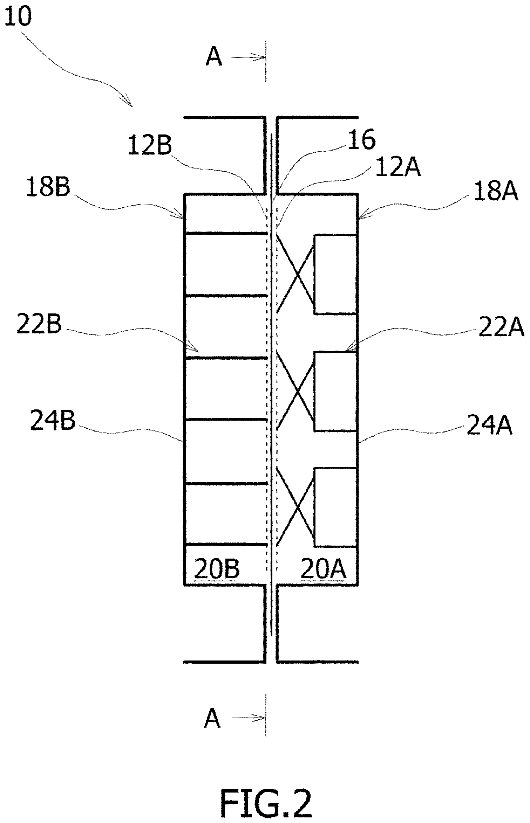

As shown in FIG. 2, the electrochemical cell 10 may comprise a first casing 18A which defines a first compartment 20A therein, a second casing 18B which defining a second compartment 20B therein, current collectors 22A, 22B, the first electrode element 12A, the second electrode element 12B, and the separator 16. The current collectors 22A, 22B may also be referred as part of electrode structures. The first and second casing 18A, 18B may include a rear wall or partition wall 24A, 24B. The partition wall 24A, 24B face the separator 16 over the first and second compartments 20A, 20B, and define these compartments 20A, 20B together with the separator 16.

The separator 16 has a first surface side and a second surface side, wherein the first surface side contacts the first compartment 20A and the second surface side contacts the second compartment 20B for electrochemically interconnecting the first compartment 20A and the second compartment 20B. The separator 16 may be ion-exchange membrane. Alternatively, the separator 16 may be porous diaphragm, particularly an ion-permeable diaphragm. Ion-permeable diaphragms do not allow gases generated by the electrochemical reaction to permeate, but have ion-exchange function. The separator 16 may be a polymeric porous membrane, inorganic porous membrane, woven or non-woven fabrics, or the like.

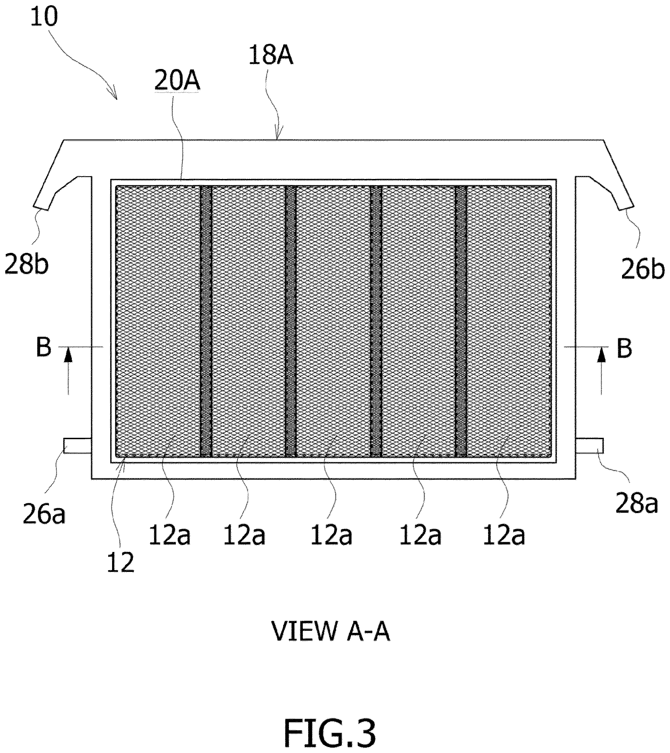

Referring to FIG. 3, the view A-A in FIG. 2 can be seen. Each electrochemical cell 10 may be connected to supply headers as well as to discharge headers. Preferably, for each compartment 20A, 20B within the electrochemical cell 10, the liquid to be electrochemical-processed is supplied from the bottom part of the cell 10 and discharged from the upper part of the cell 10. For example, in FIG. 3, the liquid for the first compartment 20A may be supplied from a bottom inlet 26a on the left side and discharged from an upper outlet 26b at the diagonal position with respect to the bottom inlet 26a. Likewise, the liquid for the second compartment 20B may be supplied from a bottom inlet 28a on the right side and discharged from an upper outlet 28b at the diagonal position with respect to the bottom inlet 28a.

In FIG. 3, the first electrode element 12A may extend over substantially the entire area of the first compartment 20A, with a small space being left around the first electrode element 12A with respect to the first casing 18A. Likewise, although not shown in FIG. 3, the second electrode element 12B may extend over substantially the entire area of the second compartment 20B, with a small space being left around the second electrode element 12B with respect to the second casing 18B. In order to increase the surface area used for electrochemical reaction and to efficiently remove the gases generated from the surfaces of the electrode elements 12 during the electrochemical reaction, the electrode element 12 may include one or more openings (open structure). In particular, the electrode element 12 may be perforated or porous electrodes. Such an open structure is advantageous in the zero-gap electrochemical cell, because gases generated on the side of the electrode element 12 facing the separator 16 may be removed through the openings toward the other side of the electrode element 12. Examples of such an electrode element 12 includes woven mesh, weave mesh, perforated metal, grid element, expanded metal, metal foam, or the like. More preferably, the electrode element is made of grid element or expanded metal. The electrode element 12 may also have a catalyst layer with high reaction activity on the surface of its base material. The material of the base material is not restricted, but may be steel, stainless steel, nickel or nickel-based alloys. One exemplary electrode element has a width of 0.1 m to 1.5 m. In one exemplary electrode element, the effective area of the electrode element is 1.0 m in width x 0.5 m in height, or more.

The first electrode element 12A may comprise a plurality of electrode elements 12a as segments, as shown in FIG. 3. Likewise, the second electrode element 12B may also comprise a plurality of electrode elements as segments (not shown).

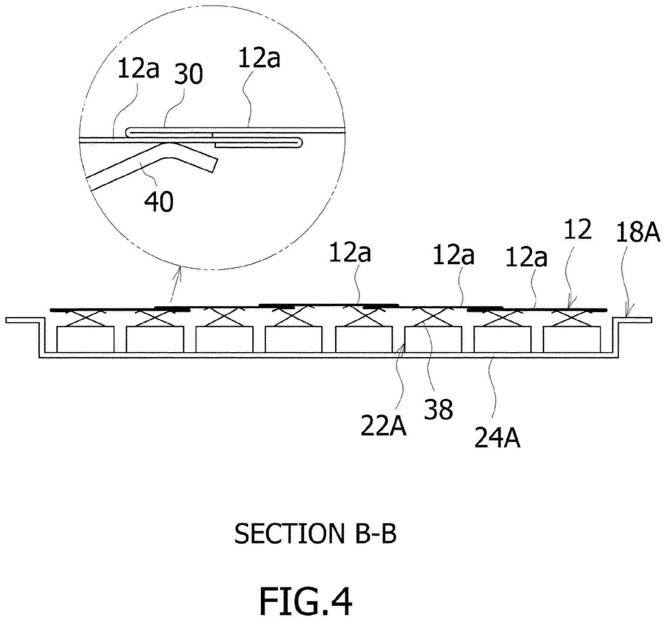

Referring to FIG. 4, the B-B section in FIG. 3 can be seen. When the electrode element 12 has the plurality of electrode elements 12a, these elements 12a may be arranged to partially overlap each other. Preferably, the width of the overlapping part is within a range of 1 % to 10 %, more preferably from 3 % to 8 %, of the width of the respective electrode element 12a.

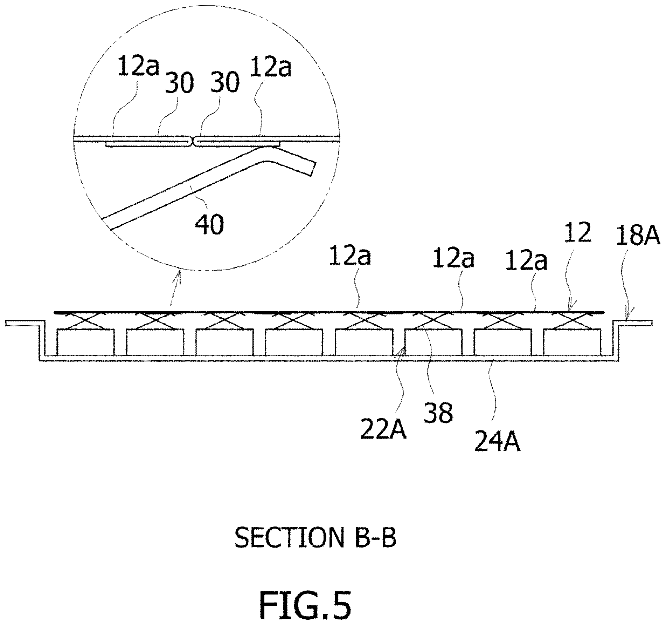

In a variant shown in FIG. 5, the electrode elements 12a may not overlap each other. The electrode elements 12a may be arranged with the edges of adjacent electrode elements 12a being joined edge-to-edge. In other words, the adjacent electrode elements 12a are so arranged as to be in contact or close to each other in the width direction of the electrochemical cell 10. This arrangement may be expected to have a flatter electrode surface.

It should be noted here that due to the zero-gap structure in which the first electrode element 12A and/or the second electrode element 12B being placed in contact or proximity to the separator 16, the separator 16 might be damaged. Specifically, in the past design, the separator might be damaged by sharp edges of the electrode element. In a case where the electrode element has a plurality of electrode elements, the middle area of the separator may also be damaged by the sharp edges of the respective electrode elements. As discussed above, EP 3 575 440 A1 addressed this issue by curving the periphery of the electrode element away from the membrane as separator. However, this solution has a drawback that, since the distance between the opposing electrode elements increase toward their edges due to the curved edges, the zero-gap design is only implemented in the middle region of each electrode element, and the electrolytic efficiency thus drops accordingly. This disadvantage becomes even more pronounced when the electrode element consists of several electrode elements.

Embodiments of the invention may solve the above problems with the feature that the first electrode element 12A and/or the second electrode element 12B has at least one edge with a hemming rim 30 at which a strip portion 30a of the electrode element 12 is hemming bent away from the separator 16. The "strip portion" means a portion of a predetermined width along the edge of a flat electrode element before hemming bending is carried out. According to this solution, by hemming the strip portion 30a of the electrode element 12, the electrode element 12 no longer possesses the sharp edge, preventing the separator 16 from being damaged. This solution is applicable even in a case where there is not enough space/gap to curve the electrode element away from the separator. Furthermore, a higher electrolysis performance can be achieved, because the zero gap design may be implemented over a larger area compared to when the ends of the electrode elements are curved away from the separator as suggested in EP 3 575 440 A1.

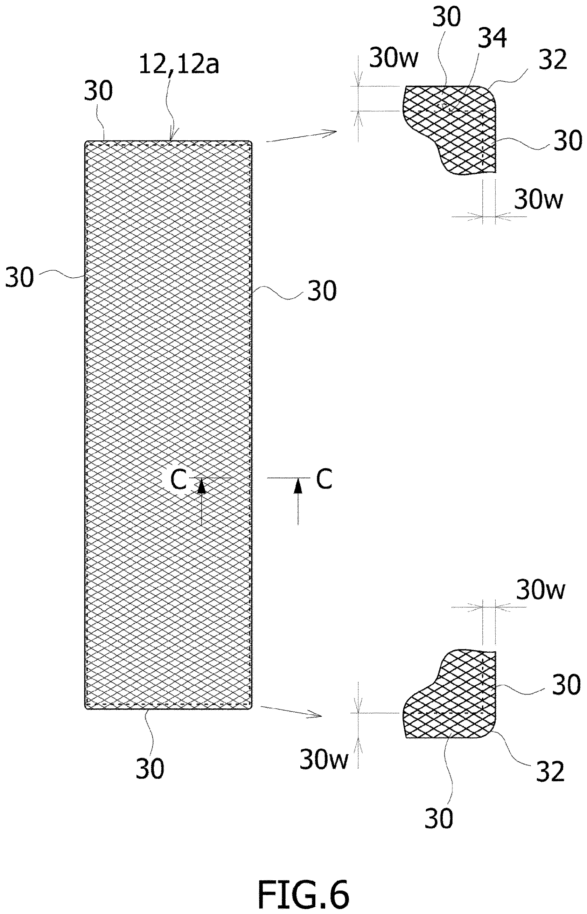

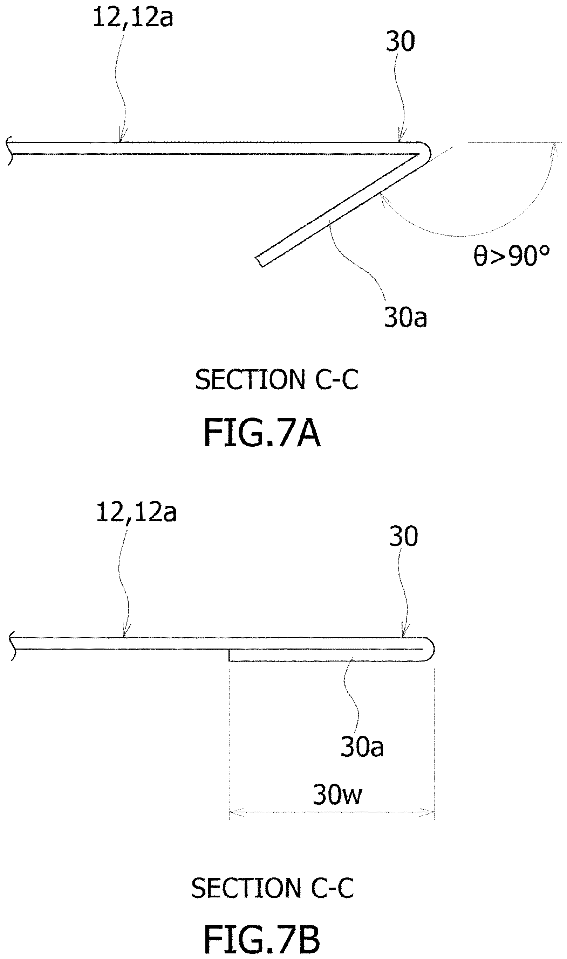

This is best shown in FIGS. 6 and 7. The hemming rim 30 is distinctive in its technical meaning from the peripheral curve in EP 3 575 440 A1. Specifically, in EP 3 575 440 A1, the periphery of the electrode element is only curved by less than 90 degrees away from the separator. In contrast, in hemming bending, the strip portion 30a of the electrode element 12 is folded back beyond 90 degrees (see, FIG. 7A).

For more reliable damage prevention, the hemming rim 30 may have a bending angle between 170 ° and 180 °, in particular between 175 ° and 180 °, more particularly between 177 ° and 180 °. In an example shown in FIG. 7B, the bending angle of the hemming rim is 180 °. It is preferable that the width 30w of the strip portion 30a of the electrode element 12 in the hemming rim 30 is in a range from 3 mm to 50 mm.

For more reliable damage prevention, the first and/or second electrode element 12A, 12B has a further edge with a hemming rim 30, wherein the two edges are provided at opposite sides of the first and/or second electrode element 12A, 12B. In an example shown in FIG. 6, all (four) edges of the electrode element 12 (12a) have the hemming rims. However, the electrode element 12 (12a) may only have two hemming rims 30 at the lateral edges. In a more advantageous example, at least one corner of the electrode element 12 (12a) has rounding 32. More preferably, all (four) corners of the electrode element 12 (12a) have rounding 32. Such rounding 32 may be formed by deforming the corners with a hammer or the like, after the formation of the hemming rim(s) 30.

One or more of the electrode elements 12a composed of the electrode element 12 may include one or more indicators 34 indicating the alignment position with another electrode element to create an overlap between these adjacent electrode elements 12a, 12a. A person assembling the cell 10 may align the electrode elements 12a with each other on the basis of the indicated overlapping width. In FIG. 6, the indicator 34 may include a notch formed in the free end of the folded strip portion 30a. In other words, the notch is not present on the outermost edge of the electrode element 12a. This arrangement is advantageous in preventing damage of the separator 16 caused by the notch. In the example of FIG. 6, the notch is formed in the upper part of the electrode element 12a. Alternatively, the notch may be formed in the lower part, or both in the upper and lower parts.

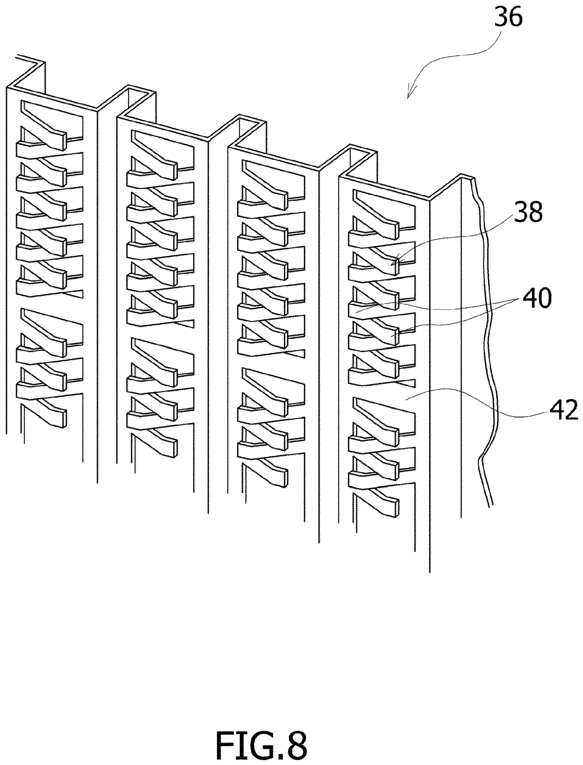

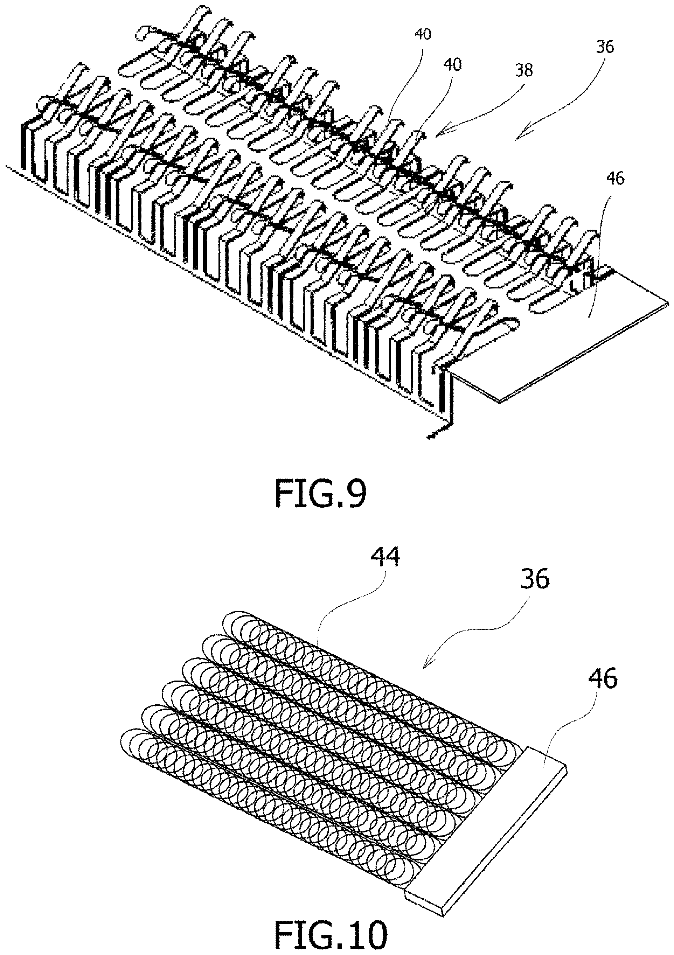

Referring to FIG. 8, a supportive element 36 arranged between the first electrode element 12A and the partition wall 24A or the current collector 22A can be seen. Additionally or alternatively, the supportive element 36 may be arranged between the second electrode element 12B and the partition wall 24B or the current collector 22B. The supportive element 36 includes an elastic member 38 adapted to push the electrode element 12 away from the partition wall 24A, 24B or the current collector 22A, 22B, i.e., toward the separator 16. In one example, the elastic member 38 may include one or more leaf springs 40 cut and raised out from a base surface 42 of the supportive element 36, the base surface 42 extending parallel to the separator 16. In the vertical direction of the electrochemical cell 10, the adjacent leaf springs protrude in alternate directions to each other so as to cross each other in an X-shape. The elastic member 38 is not limited to the example in FIG. 8. The elastic member 39 may have any form as long as being capable of bringing the electrode element 12 into contact with the separator 16 at a given pressure. The elastic member 38 may have thinner and more numerous leaf springs 38, as shown in FIG. 9. The elastic member 38 may have one or more coil springs 44, as shown in FIG. 10.

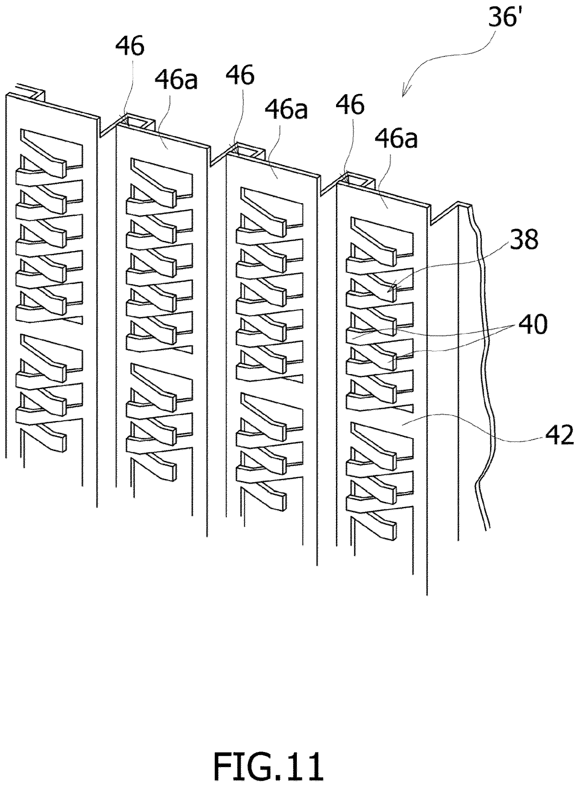

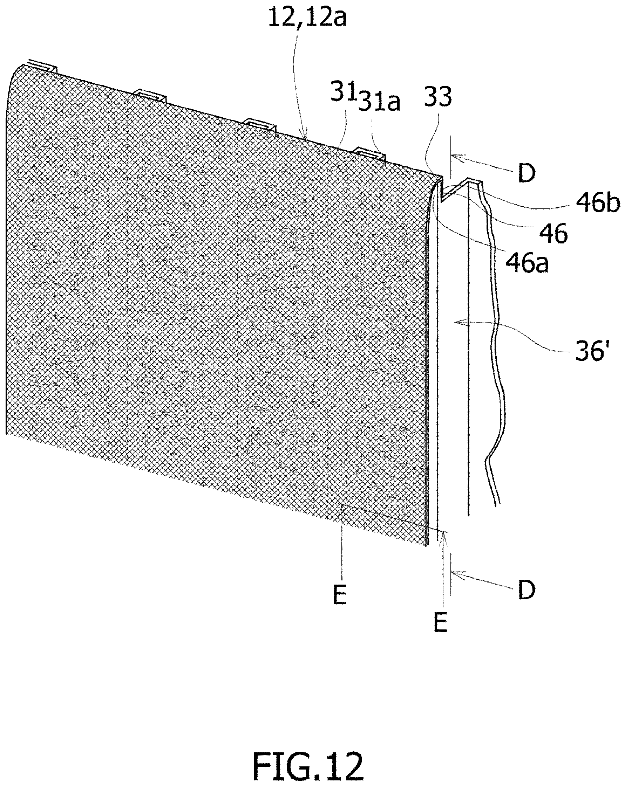

Referring to Fig. 11, another exemplary supportive element 36' suitable for attachment of the electrode element 12 is shown. The supportive element 36' includes the elastic member 38 comprising the leaf springs 40 same as in the example of FIG. 10. The supportive element 36' of FIG. 11 further comprises at least one protrusion 46 extending from at least one end of the supportive element 36'. The protrusion 46 may be formed at the upper end and/or the bottom end of the supportive element 36'. The protrusion 46 may have a size and shape on which the corresponding end (an inclined rim described below) of the electrode element 12 can be hooked and fixed. The protrusion 46 may have a front side 46a facing the electrode element 12 and a rear side 46b (FIG. 12) facing away from the electrode element 12.

Referring to FIG. 12, the electrode element 12 is attached to the supportive element 36' by means of the protrusion 46. To this end, the electrode element 12 may have a corresponding inclined rim 31 in which a strip portion 31a of the electrode element 12 is inclined bent away from the separator 16. The strip portion 31a of the electrode element 12 in the inclined rim 31 is adapted to lock the rear side 46b of the protrusion 46 to fix the edge of the electrode element 12 to the supportive element 36'. The inclined rim 31 may be formed on the upper end and/or the lower end of the electrode element 12. The inclined rim 31 may have a bending angle between 2 ° and 70 °, in particular between 15 ° and 45 °, more particularly between 15 ° and 30 ° with respect to the adjacent flat part of the electrode element 12.

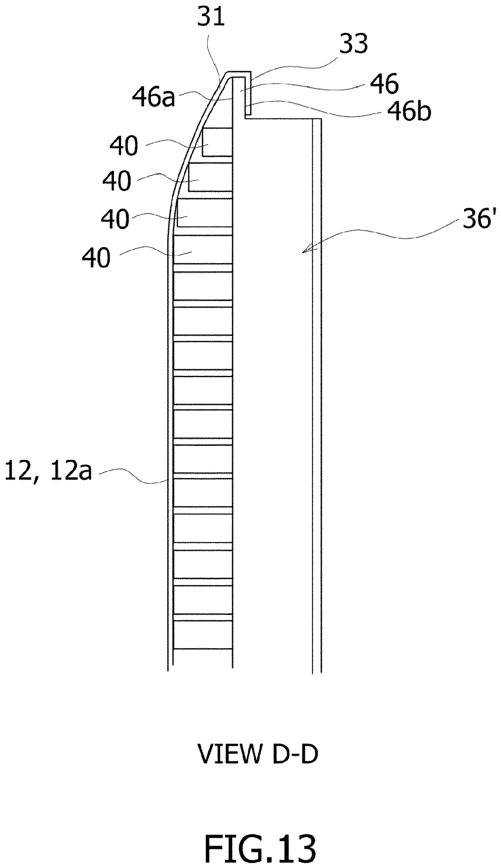

Referring to FIG. 13, the D-D view in FIG. 12 can be seen. The inclined rim 31 of the electrode element 12 hooked and fixed to the protrusion 46 of the supportive element 36' can be seen. More preferably, the inclined rim 31 is hooked on the protrusion 46 with an aid of L-shape bend 33 at the tip of the inclined rim 31. Preferably, the inclined rim 31 curves in a convex shape towards the separator 16. For this purpose, the height of the elastic member 38 from the base surface 42 of the supportive element 36' may be adjusted. Specifically, in the periphery of the supportive element 36', the heights of the leaf springs 40 from the base surface 42 may gradually be decreased towards the protrusion 46.

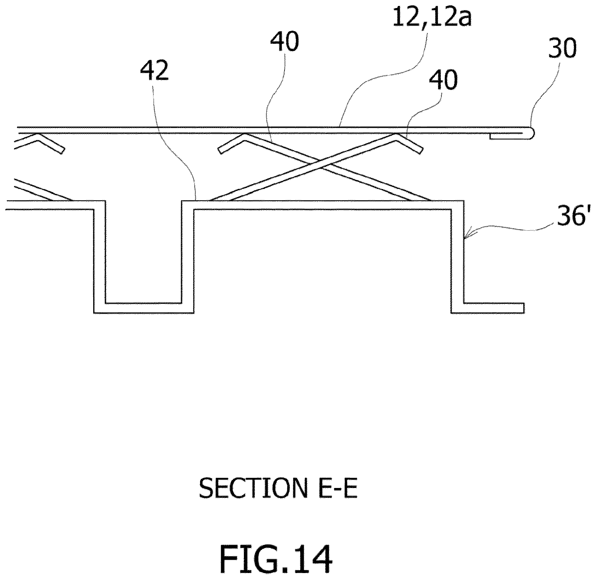

Referring to FIG. 14, the section E-E in FIG. 12 is shown. The hemming rim 30 formed on the lateral edges of the electrode element 12 can be seen. The electrode element 12 no longer possesses the sharp edges. As such, the damage of the separator 16 due to the sharp edge of the electrode element can be prevented. At the same time, the electrode element 12 may easily be attached to the supportive element 36' by means of the protrusion 46 and without additional fixing elements.

According to an embodiment of the present invention, a method of retrofitting a finite-gap electrochemical cell into a zero-gap type electrochemical cell is provided. The method comprising the steps of providing a zero-gap type electrochemical cell with at least two electrochemical electrode structures, removing the at least two electrochemical electrode structures, and inserting the electrochemical electrode structures as discussed above. For example, an electrode element of a finite-gap electrochemical cell may be replaced with the electrode element 12 with the hemming rim 30 to convert the finite-gap electrochemical cell into a zero-gap type electrochemical cell 10.

### Reference sign list

- 10: electrochemical cell
- 12A (12): first electrode element
- 12B (12): second electrode element
- 12a: electrode element
- 14: electrochemical cell unit
- 16: separator
- 18A: first casing
- 18B: second casing
- 20A: first compartment
- 20B: second compartment
- 22A, 22B: current collector
- 24A, 24B: partition wall
- 30: hemming rim
- 30a: strip portion
- 31: inclined rim
- 31a: strip portion
- 32: corner
- 33: L-shape bend at the tip
- 34: indicator
- 36, 36': supportive element
- 38: elastic member
- 40: leaf spring
- 42: base surface
- 44: coil spring
- 46: protrusion

## Claims

1. Electrochemical electrode structure comprising a current collector (22A, 22B) and at least one electrode element (12A, 12B), the at least one electrode element (12A, 12B) being a two-dimensionally extended electrically conductive element having an open structure,
**characterized in that**
the at least one electrode element (12A, 12B) has at least one edge with a hemming rim (30) at which a strip portion (30a) of the electrode element (12A, 12B) is hemming bent away.

2. Electrochemical electrode structure according to claim 1, wherein the hemming rim (30) has a bending angle between 170 ° and 180 °, in particular between 175 ° and 180 °, more particularly between 177 ° and 180 °.

3. Electrochemical electrode structure according to claim 1 or 2, wherein the at least one electrode element (12A, 12B) has a further edge with a hemming rim (30) wherein the two edges are provided at opposite sides of the at least one electrode element (12A, 12B).

4. Electrochemical electrode structure according to any of claims 1 to 3, wherein the electrochemical electrode structure has a supportive element (36, 36') arranged between the at least one electrode element (12A, 12B) and the current collector (22A, 22B), the supportive element (36, 36') comprising an elastic member (38) adapted to push the at least one electrode element (12A, 12B) away from the current collector (22A, 22B).

5. Electrochemical electrode structure according to claim 4, wherein the at least one electrode element (12A, 12B) has four edges each having a hemming rim (30).

6. Electrochemical electrode structure according to claim 4, wherein the at least one electrode element (12A, 12B) has two further edges at opposite sides of the at least one electrode element (12A, 12B) with an inclined rim (31) in which a strip portion (31a) of the electrode element (12A, 12B) is inclined bent away from the separator (16).

7. Electrochemical electrode structure according to claim 6, wherein the inclined rim (31) has a bending angle which is greater than 0 ° but equal to or smaller than 70 °, in particular the bending angle being between 15 ° and 45 °, more particularly between 15 ° and 30 °.

8. Electrochemical electrode structure according to claim 6 or 7, wherein the supportive element (36') comprises at least one protrusion (46) extending from at least one end of the supportive element (36'), each of the at least one protrusions (46) having a front side (46a) facing the at least one electrode element (12A, 12B) and a rear side (46b) facing away from the at least one electrode element (12A, 12B), wherein the strip portion (31a) of the electrode element (12A, 12B) in the inclined rim (31a) is adapted to lock the rear side (46b) of the at least one protrusion (46) to fix at least one edge of the at least one electrode element (12A, 12B) to the supportive element (36').

9. Electrochemical electrode structure according to any of claims 1 to 8, wherein the width (30w) of the strip portion (30a) of the electrode element (12A, 12B) in the hemming rim (30) is in a range from 3 mm to 50 mm.

10. Electrochemical electrode structure according to any of claims 1 to 9, wherein the electrochemical electrode structure comprises a plurality of electrode elements (12a).

11. Electrochemical electrode structure according to claim 1 to 10, wherein the electrode elements (12a) from the plurality of electrode elements (12a) are arranged with the edges of adjacent electrode elements (12a) overlapping with each other or with the edges of adjacent electrode elements (12a) being joined edge-to-edge.

12. Electrochemical electrode structure according to any of claims 1 to 11, wherein the at least one electrode element (12A, 12B) is a grid element or an expanded mesh element.

13. Electrochemical cell (10) comprising a first electrode element (12A), a second electrode element (12B) and a separator (16), with the separator (16) being a two-dimensionally extended partially permeable element arranged between the first electrode element (12A) and the second electrode element (12B), the two-dimensionally extended partially permeable element having two surface sides,
**characterized in that**
either the first electrode element (12A) or the second electrode element (12B), or both the first and second electrode elements (12A, 12B), are of an electrochemical electrode structure according to any of claims 1 to 12, wherein each electrode element (12A, 12B) is arranged next to one of the two surface sides of the separator (16) such that at each hemming rim (30), the electrode element (12A, 12B) is hemming bent away from the surface side of the separator (16).

14. Electrochemical cell (10) according to claim 13, wherein the electrochemical cell (10) comprises a first compartment (20A) and a second compartment (20B), wherein
- the first compartment (20A) accommodates the first electrode element (12A),
- the second compartment accommodates the second electrode element (12B),
- the separator (16) separates the first compartment (20A) and the second compartment (20B) being arranged therebetween, and
- the separator (16) has a first surface side and a second surface side wherein the first surface side contacts the first compartment (20A) and the second surface side contacts the second compartment (20B) for electrochemically interconnecting the first compartment (20A) and the second compartment (20B).

15. Method of retrofitting a finite-gap electrochemical cell into a zero-gap type electrochemical cell, the method comprising the steps of
- providing a zero-gap type electrochemical cell with at least two electrochemical electrode structures,
- removing the at least two electrochemical electrode structures, and
- inserting the electrochemical electrode structures according to any of claims 1 to 12.
